**Europäisches Patentamt**

**European Patent Office**

**Office européen des brevets**

(19)

(11) Veröffentlichungsnummer: **0 174 920**
**B1**

(12) ## EUROPÄISCHE PATENTSCHRIFT

(45) Veröffentlichungstag der Patentschrift:
**11.05.88**

(51) Int. Cl.⁴: **B 23 K 35/32**

(21) Anmeldenummer: **85890191.1**

(22) Anmeldetag: **27.08.85**

(54) Verwendung einer Legierung als Schweisszusatzwerkstoff.

(30) Priorität: **12.09.84 AT 2912/84**

(43) Veröffentlichungstag der Anmeldung:
**19.03.86 Patentblatt 86/12**

(45) Bekanntmachung des Hinweises auf die Patenterteilung:
**11.05.88 Patentblatt 88/19**

(84) Benannte Vertragsstaaten:
**BE CH DE FR GB IT LI LU NL SE**

(56) Entgegenhaltungen:
**AT - B - 296 717**
**AT - B - 298 930**

(73) Patentinhaber: **VEREINIGTE EDELSTAHLWERKE
AKTIENGESELLSCHAFT (VEW), Elisabethstrasse 12,
A-1010 Wien (AT)**

(72) Erfinder: **Hochörtler, Günter, Dr., Peter
Tunner-Gasse 15, A-8605 Kapfenberg (AT)**
Erfinder: **Kutilin, Paul, Johann Böhm-Strasse 30,
A-8605 Kapfenberg (AT)**
Erfinder: **Schabereiter, Heinz, Hugo Wolf-Strasse 4,
A-8605 Kapfenberg (AT)**
Erfinder: **Widowitz, Herbert, Ing., Kernstockgasse 49,
A-8605 Kapfenberg (AT)**

(74) Vertreter: **Widtmann, Georg, Dr., Vereinigte
Edelstahlwerke Aktiengesellschaft (VEW)
Elisabethstrasse 12, A-1010 Wien (AT)**

## Beschreibung

Bei Rauchgaswärmetauschern, z.B. Dampferzeugern, Kondensatoren und dgl., müssen aufgrund der unterschiedlichen Beanspruchungen in der Regel zwei verschiedene Werkstoffe eingesetzt werden, wobei eine Werkstoffpaarung von hitzebeständigen bzw. warmfesten Werkstoffen mit un- bzw. niedriglegierten Werkstoffen stattfindet. Diese Werkstoffe wurden bislang mit einer Legierung folgender Zusammensetzung in Gew.-%

| C | 0,10 |
| Si | 1,5 |
| Mn | 4,0 |
| Cr | 19,5 |
| Mo | 0,6 |
| Ni | 8,5 |

durch Schweissen verbunden. Es hat sich nun gezeigt, dass die Schweissverbindung und auch die Aufmischzonen der korrosiven Beanpruchung nicht gewachsen sind. So traten bei einem derartigen Rauchgaswärmetauscher sowohl am Schweissgut als auch in den Aufmischzonen starke Korrosion auf.

Die vorliegende Erfindung hat sich zum Ziel gesetzt, einen Schweisszusatzwerkstoff zu schaffen, der geeignet ist, hochwarmfeste bzw. hitzebeständige Stähle mit un- bzw. niedriglegierten Stählen zu verbinden, wobei dann diese Verbindung auch korrosiven Beanspruchungen bei unterschiedlichen Temperaturen und unterschiedlichen Konzentrationen, insbesondere von Schwefelsauerstoffsäuren, z.B. Schwefelsäure, standhalten soll.

Die Erfindung besteht im wesentlichen in der Verwendung einer Legierung aus in Gew.-%

| C | | bis | 0,05 | | |
| Si | 0,1 | bis | 1,1 | | |
| Mn | 1,0 | bis | 7,0 | | |
| Cr | 18,0 | bis | 22,5 | | |
| Mo | 4,0 | bis | 7,0 | | |
| Ni | 23,0 | bis | 27,0 · | | |
| Cu | 1,6 | bis | 3,0 | | |
| N | 0,05 | bis | 0,3 | | |
| gegebenenfalls | W | 0,1 | bis | 2,0 |
| gegebenenfalls | V | 0,01 | bis | 1,5 |
| | Co | 0 | bis | 3,8 |
| | Ti | 0 | bis | 0,5 |
| | Nb | 0 | bis | 1,0 |

gegebenenfalls Ce und/oder La 0,01 bis 0,4,
Rest Eisen und herstellungsbedingte Verunreinigungen,
als Schweisszusatzwerkstoff zum Verbinden von hochwarmfesten bzw. hitzebeständigen Stählen mit un- bzw. niedriglegierten Stählen, bei korrosiver Beanspruchung, insbesondere mit Schwefelsauerstoffsäuren unterschiedlicher Konzentration und Temperatur.

Es war durchaus überraschend, dass eine derartige Elektrode zum Verbinden von hochwarmfesten bzw. hitzebeständigen Stählen mit un- bzw. niedriglegierten Stählen geeignet ist, wobei die o.a. Eigenschaften erhalten werden. Eine derartige Legierung wurde bislang als Schweisszusatzwerkstoff für artgleiche, hochmolybdänhaltige Chrom-Nickel-Stähle verwendet, die ihren Einsatz finden bei besonders schwierigen Korrosionsbedingungen in der chemischen Industrie. Es war durchaus überraschend, dass eine Schweissverbindung mit nicht artgleichen Werkstoffen ebenfalls den korrosiven Beanspruchungen gewachsen ist, wobei trotz des grossen Unterschiedes im Legierungsgehalt keine elektrochemischen Korrosionen auftraten.

Weist das Schweissgut einen geringeren Mangangehalt auf, dann ist die Heissrissanfälligkeit zu gross. Bei einem höheren Chromgehalt als angegeben, wird die Chromversprödung der Schweisse aufgrund des Molybdängehaltes zu hoch. Der Nickelgehalt kann aufgrund des an sich hohen Molybdängehaltes niedrig gehalten werden, wobei noch keine Versprödung eintritt. Durch die Zugabe von Wolfram und Vanadin kann eine höhere Festigkeit erreicht werden. Als Austenitbildner kann Kobalt erwünscht werden, Titan und Niob können zur Stabilisierung des Kohlenstoffs beigegeben werden. Eine bessere Warmverformbarkeit ist durch Zugabe von Cer und Lanthan möglich.

Durch den Einsatz des Schweisszusatzwerkstoffes werden folgende Aufgaben gelöst.

Die Schweissverbindung ist trotz Aufmischung mit dem un- bzw. niedriglegierten Stahl, z.B. dem Kesselrohr, und dem Anschweissteil aus einem hochwarmfesten bzw. hitzebeständigen Stahl von hoher Zähigkeit und kann damit den Montagebeanspruchungen und Wärmespannungen standhalten.

Das Schweissgut weist bei einer Wärmebehandlung praktisch keine wesentlichen Versprödungen auf.

Die Aufmischzone des Schweissgutes mit dem hochwarmfesten bzw. hitzebeständigen Stahl soll gegen Verzunderung bzw. Nickelsulfidbildung beständig sein.

Im folgenden wird die Erfindung anhand der Beispiele näher erläutert.

*Beispiel 1*

Es wurden zwei Bleche unterschiedlicher Zusammensetzung, einer Dicke von 10 mm durch Schweissen miteinander verbunden. Die Zusammensetzung der Legierung der Bleche in Gew.-% war wie folgt:

C 0,10, Si 0,2, Mn 0,3, Fe Rest,
C 0,2, Si 1,0, Cr 25,0, Ni 4,0, Fe Rest.

Die Schweissnaht wurde mit einer Elektrode folgender Zusammensetzung in Gew.-% ausgeführt:

C 0,03, Si 0,4, Mn 4,0, Cr 19,5, Mo 6,5, Ni 24,5, Cu 2,4, N 0,15, Fe Rest.

Die Breite der V-förmigen Schweissnaht betrug 10 mm. Aus der so erhaltenen Schweissverbindung wurde eine Probe in der Grösse von 10 × 25 × 110 mm quer zur Schweissrichtung entnommen und in 50%iger Schwefelsäure 240 Minuten bei 75°C ausgelagert. Aufgrund der Gewichtsabnahme wurde der in der Tabelle angegebene Abtrag in mm/Jahr errechnet.

*Beispiel 2*

Es wurden zwei Bleche unterschiedlicher Zusammensetzung, einer Dicke von 10 mm durch Schweis-

sen miteinander verbunden. Die Zusammensetzung der Legierung der Bleche in Gew.-% war wie folgt:

C 0,10, Si 0,8, Mn 0,5, Cr 7,0, Al 0,8, Fe Rest, C 0,10, Si 0,2, Mn 0,3, Fe Rest.

Die Schweissnaht wurde mit einer Elektrode folgender Zusammensetzung in Gew.-% ausgeführt: C 0,02, Si 0,5, Mn 6,0, Cr 18,5, Mo 6,0, Ni 23,5, Cu 2,0, N 0,25, Fe Rest.

Korrosionsuntersuchung wie im Beispiel 1 angegeben.

*Beispiel 3*

Es wurden zwei Bleche unterschiedlicher Zusammensetzung, einer Dicke von 10 mm durch Schweissen miteinander verbunden. Die Zusammensetzung der Legierung der Bleche in Gew.-% war wie folgt:
C 0,15, Si 2,0, Mn 1,5, Cr 25,0, Ni 21,0, Fe Rest und C 0,15, Si 0,2, Mn 0,6, Mo 0,3, Fe Rest.

Die Schweissnaht wurde mit einer Elektrode folgender Zusammensetzung in Gew.-% ausgeführt:
C 0,05, Si 0,6, Mn 5,5, Cr 22,0, Mo 6,3, Ni 26,5, Cu 2,8, N 0,20, Fe Rest.

Korrosionsuntersuchung wie im Beispiel 1 angegeben.

*Beispiel 4*

Es wurden zwei Bleche unterschiedlicher Zusammensetzung, einer Dicke von 10 mm durch Schweissen miteinander verbunden. Die Zusammensetzung der Legierung der Bleche in Gew.-% war wie folgt:
C 0,12, Si 0,25, Mn 0,60, Cr 1,0, Mo 0,5, Fe Rest und
C 0,15, Si 2,0, Mn 1,0, Cr 20,0, Ni 12,0, Fe Rest.

Die Schweissnaht wurde mit einer Elektrode folgender Zusammensetzung in Gew.-% ausgeführt:

C 0,04, Si 0,5, Mn 5,0, Cr 21,0, Mo 6,0, Ni 26,0, Cu 2,5, N 0,2, W 1,0, Co 2,0, Fe Rest.

Korrosionsuntersuchung wie im Beispiel 1 angegeben.

*Beispiele 5, 6, 7 und 8*

Es wurden die Blechpaarungen gemäss der Beispiele 1 bis 4 mit einer Elektrode folgender chemischer Zusammensetzung in Gew.-% geschweisst:

C 0,10, Si 1,5, Mn 4,0, Cr 19,5, Mo 0,6, Ni 8,5.

Korrosionsuntersuchungen wie im Beispiel 1 angegeben.

### TABELLE

| Beispiel | ₋mm/Jahr |
|----------|----------|
| 1 | 1 |
| 2 | 1,5 |
| 3 | 2 |
| 4 | 0,5 |
| 5 | 1000 |
| 6 | 900 |
| 7 | 1070 |
| 8 | 850 |

Wie den Werten der Tabelle zu entnehmen ist, weisen die Schweissverbindungen, welche mit einer Elektrode gemäss der vorliegenden Erfindung gefertigt wurden, einen wesentlich geringeren korrosiven Abtrag auf, als bei der Schweissverbindung gemäss dem bekannten Stand der Technik.

**Patentanspruch**

Verwendung einer Legierung aus in Gew.-%

| C | | bis | 0,05 | | |
|---|---|---|---|---|---|
| Si | 0,1 | bis | 1,1 | | |
| Mn | 1,0 | bis | 7,0 | | |
| Cr | 18,0 | bis | 22,5 | | |
| Mo | 4,0 | bis | 7,0 | | |
| Ni | 23,0 | bis | 27,0 | | |
| Cu | 1,6 | bis | 3,0 | | |
| N | 0,05 | bis | 0,3 | | |
| gegebenenfalls | W | 0,1 | bis | 2,0 |
| gegebenenfalls | V | 0,01 | bis | 1,5 |
| | Co | 0 | bis | 3,8 |
| | Ti | 0 | bis | 0,5 |
| | Nb | 0 | bis | 1,0 |

gegebenenfalls Ce und/oder La 0,01 bis 0,4,
Rest Eisen und herstellungsbedingte Verunreinigungen,

als Schweisszusatzwerkstoff zum Verbinden von hochwarmfesten bzw. hitzebeständigen Stählen mit un- bzw. niedriglegierten Stählen, bei korrosiver Beanspruchung, insbesondere mit Schwefelsauerstoffsäuren unterschiedlicher Konzentration und Temperatur.

**Claim**

The use of an alloy consisting in percent by weight of:

| C | | to | 0.05 | | |
|---|---|---|---|---|---|
| Si | 0.1 | to | 1.1 | | |
| Mn | 1.0 | to | 7.0 | | |
| Cr | 18.0 | to | 22.5 | | |
| Mo | 4.0 | to | 7.0 | | |
| Ni | 23.0 | to | 27.0 | | |
| Cu | 1.6 | to | 3.0 | | |
| N | 0.05 | to | 0.3 | | |
| optionally | W | 0.1 | to | 2.0 |
| optionally | V | 0.01 | to | 1.5 |
| | Co | 0 | to | 3.8 |
| | Ti | 0 | to | 0.5 |
| | Nb | 0 | to | 1.0 |

optionally Ce and/or La 0.01 to 0.4,
remainder iron and impurities caused by production,

as a welding filler material for bonding high-temperature or heat-resisting steels to unalloyed steels or low-alloy steels, with exposure to corrosion, in particular by sulphur oxyacids of differing concentration and temperature.

## Revendication

Utilisation d'un alliage, ayant en % en poids la composition suivante:

| C  |      | jusqu'à | 0,05 |
|----|------|---------|------|
| Si | 0,1  | à       | 1,1  |
| Mn | 1,0  | à       | 7,0  |
| Cr | 18,0 | à       | 22,5 |
| Mo | 4,0  | à       | 7,0  |
| Ni | 23,0 | à       | 27,0 |
| Cu | 1,6  | à       | 3,0  |
| N  | 0,05 | à       | 0,3  |

| éventuellement | W  | 0,1  | à | 2,0 |
|----------------|----|------|---|-----|
| éventuellement | V  | 0,01 | à | 1,5 |
|                | Co | 0    | à | 3,8 |
|                | Ti | 0    | à | 0,5 |
|                | Nb | 0    | à | 1,0 |

éventuellement Ce et/ou La 0,01 à 0,4,
le reste étant du fer et les impuretés dues à l'élaboration,
en tant que matériau d'apport de soudage, pour assembler des aciers réfractaires ou résistant à chaud à des aciers non-alliés, en présence d'une contrainte corrosive, en particulier due à des acides contenant de l'oxygène et du soufre, à différentes concentrations et températures.